Europäisches Patentamt

(19) European Patent Office

Office européen des brevets

(11) Numéro de publication : **0 069 638**

**B1**

(12) **FASCICULE DE BREVET EUROPÉEN**

(45) Date de publication du fascicule du brevet :
**19.12.84**

(21) Numéro de dépôt : **82401178.7**

(22) Date de dépôt : **25.06.82**

(51) Int. Cl.³ : **C 09 D 3/00, C 09 K 3/30**

(54) Composition de type aérosol de peinture et de vernis acryliques.

(30) Priorité : **26.06.81 FR 8112627**
**22.12.81 FR 8123985**

(43) Date de publication de la demande :
**12.01.83 Bulletin 83/02**

(45) Mention de la délivrance du brevet :
**19.12.84 Bulletin 84/51**

(84) Etats contractants désignés :
**BE DE GB IT NL**

(56) Documents cités :
**FR-A- 2 124 314**
**FR-A- 2 355 057**
**US-A- 3 776 873**
**US-A- 3 987 001**

(73) Titulaire : **SOCIETE POUR L'ENTRETIEN DU MOUVE-MENT MECANIQUE ET ELECTRIQUE S.E.M.M.E.**
**41, rue de Bruxelles**
**F-78500 Sartrouville (Yvelines) (FR)**

(72) Inventeur : **Puglionisi, Claude**
**41, rue de Bruxelles**
**F-78500 Sartrouville Yvelines (FR)**

(74) Mandataire : **Chevallier, Robert Marie Georges**
**Cabinet BOETTCHER 23, rue La Boétie**
**F-75008 Paris (FR)**

**0 069 638**

**Description**

L'invention a pour objet une composition du type aérosol de peinture et de vernis contenant uniquement de la résine acrylique.

On connaît depuis longtemps les produits aérosols qui permettent de projeter dans l'air ou sur une surface des substances très diverses par l'intermédiaire d'un propulseur ; ce dernier est un gaz sous pression ou un gaz liquéfié qui se vaporise à la température du milieu environnant.

Les aérosols ont été largement utilisés dans le domaine des peintures et des vernis, notamment pour la peinture de surfaces relativement petites, pour l'exécution de retouches après réparation. Il est évident que la remise en état des carrosseries d'automobiles endommagées est une activité dans laquelle les aérosols sont particulièrement utiles, aussi bien pour les professionnels que pour les particuliers. Dans ce qui suit on se référera principalement à cette activité sans que ceci implique une intention limitative quelconque.

On sait que les peintures sous forme d'aérosols ont été employées depuis leur origine dans la réparation automobile. Mais les peintures dont se servent les constructeurs d'automobiles ont subi une évolution importante. Les peintures nitrocellulosiques utilisées initialement ont été améliorées par adjonction de résines, transformées en nitroglycérophtaliques puis remplacées de manière universelle, actuellement, par des peintures et des vernis à base de résines acryliques. Cette évolution est due aux défauts relatifs des peintures et vernis nitrocellulosiques qui, en particulier, supportent mal les atmosphères de brouillard salin, en comparaison des peintures et vernis acryliques qui ont une plus grande dureté et une meilleure résistance aux atmosphères acides ou alcalines.

Il est facile de réaliser des aérosols à base de peintures ou de vernis nitrocellulosiques mais il n'est pas souhaitable de s'en servir pour faire des retouches sur les surfaces recouvertes de peintures ou de vernis acryliques. Si le résultat semble satisfaisant au début, une différence d'aspect se manifeste assez vite avec le temps et devient inadmissible.

On a donc tenté de réaliser des aérosols avec les peintures et les vernis acryliques qu'utilisent les construteurs d'automobiles mais on s'est heurté à une difficulté importante que l'on expliquera maintenant. Il est admis couramment qu'une pulvérisation convenable d'une peinture ou d'un vernis ne s'obtient pas, en pratique, sans l'emploi comme propulseur en proportion relativement grande de l'un ou de plusieurs des dérivés chloro-fluorés du méthane connus sous la marque FREON. On estime, par exemple, que la présence d'une mélange de ces dérivés en quantité représentant au moins 50 % du produit total en poids donne la garantie d'une pulvérisation satisfaisante.

Or, on a constaté que ces dérivés du méthane provoquent une prise en masse indésirable des compositions acryliques. Dans certaines circonstances, la prise en masse est presque immédiate, après le remplissage du récipient. En diminuant le pourcentage des dérivés du méthane dans l'aérosol on ne parvient qu'à retarder la vitesse de prise en masse à l'intérieur du récipient, avant toute utilisation. Par ailleurs, la baisse de ce pourcentage dans l'aérosol s'accompagne assez vite d'une pulvérisation moins satisfaisante.

L'emploi comme propulseur d'un gaz sous pression n'est pas non plus une solution acceptable car on rencontre alors les difficultés bien connues de la peinture au pistolet à l'air sous pression. La finesse de la pulvérisation dépend non seulement de la viscosité de la peinture liquide mais aussi de la pression du gaz propulseur. Or celle d'un gaz comprimé n'a pas la stabilité de celle d'un gaz liquéfié.

En fait, toutes les tentatives de mise au point d'un aérosol de peinture ou de vernis acrylique capable de satisfaire aux conditions imposées par les normes des constructeurs d'automobiles n'ont pas abouti à un résultat acceptable. On fera remarquer ici que l'objet de l'invention est une composition aérosol obtenue à partir d'une peinture ou d'un vernis à liant uniquement acrylique du genre des peintures et des vernis qui sont employés dans la construction ou la réparation des automobiles pour être projetés au pistolet, étant entendu aussi que les retouches faites à l'aide de cet aérosol de l'invention doivent satisfaire aux normes des constructeurs.

On trouve dans le commerce une peinture aérosol qui est dite acrylique parce qu'elle contient un pourcentage plutôt faible de résine acrylique. Il s'agit d'une adjonction de cette résine à une peinture nitrocellulosique. On ne dispose donc pas en réalité d'une véritable peinture acrylique mais d'une peinture nitrocellulosique améliorée. La quantité de résine acrylique est nécessairement faible, en raison du risque de prise en masse évoqué plus haut. Une telle composition aérosol ne satisfait pas aux normes des constructeurs d'automobiles parce qu'elle présente encore les défauts principaux des peintures nitrocellulosiques (brillance et dureté relatives insuffisantes).

Le but principal de l'invention est d'apporter une composition de type aérosol pour peintures et vernis à liant exclusivement acrylique dont la projection sur une surface donne une couche qui est acceptable selon les exigences des normes appliquées en construction automobile.

Pour atteindre ce but, il ne suffit pas de modifier la nature du propulseur afin d'éviter la prise en masse de la résine acrylique. En effet, il est inévitable d'utiliser une quantité suffisamment élevée (au moins 30 % en poids du poids total) d'un dérivé ou d'un mélange de dérivés chlorofluorés du méthane pour obtenir une pulvérisation fine et constante. Pour parvenir à un résultat aussi parfait que possible il faut selon l'invention, agir sur les trois composants principaux de l'aérosol qui sont : la nature du diluant,

2

le rapport entre le diluant et la peinture, le propulseur. C'est la détermination judicieuse de la nature et des proportions de ces constituants qui procure la meilleure composition de l'aérosol. Toutefois, la nature du diluant a une importance principale qui donne déjà, à elle seule, un résultat appréciable. Ainsi qu'il apparaîtra plus loin, une composition selon l'invention est radicalement différente, sauf pour une nature acrylique de la résine, de celle des peintures du commerce qui sont vendues pour être appliquées au pinceau ou au pistolet.

Par exemple, une peinture acrylique classique est préparée à partir de copolymères d'acrylates de méthyle, d'éthyle et de butyle. Comme solvant on emploie couramment de l'acétone (en proportion de 25 à 30 %), de l'acétate d'éthylèneglycol, un alcool isopropylique. Comme diluant on se sert d'un hydrocarbure aromatique (toluène ou xylène) en proportion allant jusqu'à 40 %, d'une essence peu coûteuse (essence A). Des diluants de cette nature sont tout à fait inutilisables dans aérosol dont le propulseur contient un dérivé chlorofluoré du méthane en raison de leur mauvaise compatibilité avec ce dernier.

On peut se reporter à cet égard au document FR-A-2 124 314 qui décrit des vernis et des peintures composés de méthacrylate de méthyle et d'acrylate de butyle avec de l'acéto-butyrate de cellulose et de phtalate de butyle et de benzyle, dans du toluène, de l'acétone et de l'acétate de l'éther monoéthylique d'éthylèneglycol. Il s'agit toujours de compositions destinées à être projetées au pistolet et jamais d'aérosol ; la question de la compatibilité avec un propulseur liquéfié n'y est donc pas abordée.

Un mélange diluant conforme à l'invention, qui est à la fois compatible avec les dérivés chlorofluorés du méthane et qui ne provoque pas de prise en masse indésirable des résines acryliques comprend les corps suivants : méthyléthylcétone (MEK) — acétate d'éthyle — acétate de butyle — acétate d'éthylène-glycol, avec la condition que l'ensemble acétone + acétates représente entre 30 et 100 % du mélange, de préférence, en pratique, entre 40 et 90 %. Il est possible de remplacer une partie de MEK par du chlorure de méthylène, mais la condition exprimée doit rester satisfaite. Il est admissible aussi d'ajouter aux corps énumérés ci-dessus d'autres solvants ou diluants ou certains agents auxiliaires, en fonction du genre de peinture ou en fonction de l'effet recherchés. Par exemple, si on souhaite une bonne brillance de la peinture déposée on peut ajouter de l'alcool isopropylique et/ou isobutylique. On peut donc ajuster la composition de l'aérosol en y adjoignant de l'alcool butylique, du cyclohexanone, des plastifiants, du nitropropane, du nitroéthane, en général des hydrocarbures aromatiques, des agents divers ... qui ont un effet diluant, en respectant la condition donnée plus haut.

Il a été reconnu que l'on peut, pour abaisser le prix de la composition, remplacer l'acétate d'éthyle par du toluène et l'acétate de butyle par du xylène, en partie ou en totalité, toujours lorsque la condition donnée plus haut est respectée par MEK et l'acétate d'éthylèneglycol qui doivent être présents. Le résultat final pour être considéré comme équivalent, sans avoir tout à fait la même qualité.

Un mélange diluant conforme à l'invention pour la préparation d'une peinture acrylique aérosol a la composition suivante. Sans adjonction de produits économiques, le mélange comprend, en poids par rapport au poids total :

— entre 30 et 100 % de cétones et d'acétates,
— entre 0 et 15 % d'alcools isopropylique et isobutylique,
— entre 0 et 5 % d'agents divers,
par exemple :
    — 80 %      de cétones et d'acétates,
    — 10 à 15 % d'alcools isopropylique et isobutylique,
    — 2 à 5 % d'agents divers.

Avec une adjonction partielle de produits moins coûteux, le mélange comprend :

— entre 40 et 80 % de cétones et d'acétates,
— entre 20 et 25 % d'hydrocarbures aromatiques (toluène, xylène)
— entre 0 et 15 % d'alcools isopropylique et isobutylique,
— entre 0 et 5 % d'agents divers,
par exemple :
    — 55 % de cétones et d'acétates,
    — 25 % d'hydrocarbures aromatiques (toluène et xylène),
    — 15 % d'alcools isopropylique et isobutylique,
    — 5 % d'agents divers.

Selon l'invention, le mélange diluant défini ci-dessus doit être utilisé de préférence dans des proportions déterminées avec la peinture acrylique employée. Cette dernière est la peinture acrylique classique, avec ses solvants habituels, que l'on trouve dans le commerce, pour séchage à l'air (par opposition au séchage sous l'effet de moyens artificiels comme les lampes à infrarouge, etc...). On prépare une composition pour aérosol, conformément à l'invention, en ajoutant à une partie de la peinture acrylique classique 1,25 à 2 parties en poids du mélange diluant de sorte que celui-ci représente en poids entre 55 et 66 % du poids total. La fluidité du produit a une grande importance dans le domaine des aérosols. On peut être conduit, dans certaines circonstances, à modifier les proportions ci-dessus jusqu'à ce que le diluant représente entre 50 et 80 % en poids du produit. La dilution à 50 % de la peinture nécessite plusieurs couches pour que l'on arrive à un dépôt suffisant mais le résultat est excellent au point de vue de l'aspect et de la tension du feuil de peinture. Inversement, une dilution trop faible fait apparaître plus nettement la tendance à l'ondulation qui est caractéristique des peintures acryliques appliquées au pistolet. C'est pour réduire cette tendance que l'on peut remplacer partiellement (de 2 à 10 % environ) la méthyléthylcétone par du chlorure de méthylène comme on l'a dit plus haut.

Au produit ainsi obtenu, on ajoute un propulseur à l'intérieur d'un récipient résistant à la pression et muni d'une valve appropriée.

Selon l'invention, on utilise un propulseur particulier qui ne fait courir aucun risque de prise en masse de la peinture acrylique. Ce propulseur résulte du mélange d'un dérivé du méthane ($CCl_3F$, $CCl_2F_2$) et de chlorure de méthylène que l'on réunit préalablement avant l'introduction du propulseur dans le récipient qui contient la composition prête à l'emploi.

On fera remarquer ici que l'on connaît déjà des compositions de type aérosol qui contiennent, à leur état final prêt à l'emploi, du chlorure de méthylène. Ce dernier est présent dans la composition à titre de solvant ou de diluant. Il est même prévu ici (voir plus haut), d'ajouter au mélange diluant une certaine quantité de chlorure de méthylène pour remplacer une partie (2 à 10 %) de méthyléthylcétone.

Quand il fait partie du mélange solvant ou diluant le chlorure de méthylène est ajouté à la peinture avant l'adjonction du mélange propulseur. Dans ce cas il n'a pas d'effet contre la précipitation que provoquent les dérivés chlorofluorés du méthane.

Au contraire, de manière surprenante et inattendue, quand le mélange propulseur a été préparé préalablement avec une certaine quantité de chlorure de méthylène, avant d'être ajouté à la peinture diluée, la précipitation ne se produit pas. L'introduction séparée dans la peinture diluée, d'une part du chlorure de méthylène, d'autre part du mélange des dérivés du méthane, n'a pas non plus d'effet favorable contre la précipitation redoutée. Il est nécessaire, selon l'invention, de réaliser un mélange unique à usage de propulseur contenant par exemple $CCl_2F_2 + CH_2Cl_2$ ou, en variante, $CCl_3F + CCl_2F_2 + CH_2Cl_2$. Quand ce mélange propulseur a été préparé on peut l'ajouter ensuite, sans attendre, à la peinture ou au vernis dilué. Il est possible, enfin d'obtenir la pression souhaitée dans le récipient contenant la composition finale, de compléter par un gaz sous pression ($CO_2$, $N_2O$, etc...).

Dans le mélange propulseur le chlorure de méthylène peut être présent en quantité allant de 1 % à 50 % en poids de ce mélange.

On notera, toutefois, que l'on a intérêt à employer la quantité de chlorure de méthylène juste nécessaire à la suppression du phénomène de précipitation. Bien que sa volatilité provoque son évaporation pendant la projection de la peinture aérosol avant qu'elle atteigne le support à peindre, il peut se produire que, lorsqu'il est présent en excès, il soit à l'origine d'une perte de brillance. Il n'y a aucune difficulté à ajuster, par quelques essais, la quantité nécessaire et suffisante de chlorure de méthylène à incorporer préalablement au mélange propulseur.

Un mélange propulseur conforme à ce qui est expliqué ci-dessus a un autre effet favorable et l'invention a aussi pour but secondaire de renforcer cet effet favorable.

Quand une peinture est conservée pendant longtemps, il se produit une sédimentation des pigments. Ceux-ci ont alors tendance à s'agglomérer de manière qui est souvent irréversible. Ce phénomène est particulièrement à craindre avec les peintures de type aérosol. En effet, les moyens d'agitation pour remise en suspension des pigments n'ont qu'une efficacité limitée puisque le récipient ne peut pas être ouvert.

La sédimentation est d'autant plus importante et devient plus facilement irréversible que les pigments employés sont en plus grande quantité de nature minérale (oxydes de fer, de titane, de chrome, etc...) plutôt qu'organique.

Il a été constaté que la redispersion des pigments, après sédimentation d'une peinture aérosol comprenant un mélange propulseur défini plus haut, qui contient du chlorure de méthylène, est plus facile, plus rapidement obtenue, même après une durée prolongée de stockage.

Pour améliorer encore ce résultat, selon la présente invention, on ajoute au concentré de peinture un élément à effet lubrifiant tel qu'une huile silicone de type méthylalcoylpolysiloxane. L'élement lubrifiant est ajouté à des proportions assez faibles (0,5 à 10 % en poids du poids de concentré de peinture) pour ne pas affaiblir l'adhérence du feuil de peinture. Il s'est révélé particulièrement efficace pour les pigments contenant des métaux. En pratique, on peut utiliser l'huile vendue dans le commerce par la Société Française Rhône-Poulenc sous la marque Rodhorsil 308 V 500/750.

Les indications que l'on a fournies jusqu'à présent permettent la réalisation d'une peinture acrylique aérosol d'usage général pour l'obtention d'une couche opaque, en carrosserie automobile et dans tous autres domaines. Mais, on le sait, on emploie aussi couramment en automobile de la peinture dite métallisée parce qu'elle contient un pigment métallique — comme l'aluminium. Cette peinture s'applique en une seule couche ou, de plus en plus fréquemment, en deux couches qui sont une première couche de peinture acrylique mate et une seconde couche de vernis qui protège la première et qui lui donne son aspect brillant.

On indiquera donc maintenant, sans intention limitative, un exemple d'un mélange diluant conforme à l'invention d'une part pour une peinture acrylique aérosol opaque ou métallisée monocouche, d'autre part pour la couche de base d'une peinture acrylique aérosol métallisée bicouche.

a) mélange diluant pour peinture opaque ou métallisée monocouche :

| — mek | 43 g (dont 2 g à 10 g remplaçable par CH$_2$Cl$_2$) |
| — acétate d'éthyle | 20 g (remplaçable par du toluène) |
| — acétate de butyle | 10 g (remplaçable par du xylène) |
| — acétate d'éthylèneglycol | 10 g |
| — alcool isopropylique | 13 g |
| — alcool butylique | 2,5 g |
| — cyclohexanone | 1 g |
| — plastifiant | 0,5 g |

b) mélange diluant pour peinture métallisée bicouche :

| — mek | 45 g |
| — acétate d'éthyle | 20 g |
| — acétate de butyle | 5 g |
| — acétate d'éthylèneglycol | 5 g |
| — alcool isopropylique | 20 g |
| — nitropropane, nitrométhane ou nitroéthane | 5 g |

Quand il s'agit d'une peinture métallisée bicouche, les deux couches sont inséparables et ne vont pas l'une sans l'autre. L'invention ne serait pas complète si elle n'apportait pas le moyen de réaliser également par aérosol les deux couches (celle de peinture acrylique mate de base et celle de vernis brillant) qui composent la peinture des carrosseries peintes en peinture métallisée bicouche.

Or, il existe aussi une difficulté réelle quand on veut parvenir à un vernis en aérosol utilisable d'une manière tout à fait adaptée aux besoins des réparateurs de carrosseries. Les vernis aérosol disponibles dans le commerce ne donnent pas satisfaction. Ces vernis sont à base de solvants et de diluants identiques à ceux que l'on emploie couramment pour la préparation des peintures. De ce fait, le solvant et le diluant du vernis sont tout à fait capables d'attaquer la couche de peinture fraîchement appliquée et d'en modifier l'aspect final et même la teinte. Pour éviter cette détrempe de la couche de peinture de base, on observe un délai d'attente assez long de séchage de cette couche de base. Cette attente qui est de 30 minutes environ retarde le déroulement du travail. De plus, il est conseillé aussi d'attendre pendant 15 mm environ entre les couches successives de vernis, ce qui rend les réparations plus longues et plus coûteuses. Pour essayer de réduire ces inconvénients, on a eu tendance jusqu'à présent à utiliser pour les vernis destinés à l'automobile des solvants et des diluants à évaporation rapide. mais, avec les vernis acryliques actuels, on constate une tension médiocre de la surface et une brillance insuffisante.

L'invention a donc également pour but d'apporter un vernis acrylique qui n'attaque pas la couche de base de peinture acrylique dans la réalisation des peintures métallisées bicouches.

Selon l'invention, on évite l'emploi pour le vernis, des solvants et diluants retenus pour la peinture, comme la méthyléthylcétone, les acétates d'éthyle et de méthyle, la méthylisobutylcétone, ..., ainsi que des pourcentages trop élevés d'alcools légers (alcools éthylique, méthylique, propylique, isopropylique, etc...) On recherche au contraire l'usage de solvants lourds. On part d'un concentré de base composé à 50 % d'extraits secs acryliques et à 50 % d'acétate de butyle. Ce mélange constitue la base de la composition aérosol. On prépare un mélange diluant comprenant entre 20 et 80 % d'acétate de butyle et d'acétate d'éthylèneglycol en proportions sensiblement égales. On complète par des hydrocarbures légers comme le toluène et par le pourcentage, qui reste de l'ordre de 1 à 3 %, d'alcool butylique ou isobutylique, dont le rôle est de réduire la viscosité du vernis et d'améliorer la tension en surface. Il est possible d'ajouter les divers agents connus à action spécifique qu'il est courant d'adjoindre au vernis (antigel, antirayures, anti-rayonnement UV, additifs améliorant la brillance, la tension de surface, etc...).

Ce mélange diluant s'emploie à la quantité nécessaire pour donner au vernis concentré de base la fluidité désirée en fonction du matériel d'application (pistolet avec ou sans air comprimé, aérosol). Quand il s'agit d'obtenir un aérosol, l'ensemble du vernis concentré et du mélange diluant sert à remplir un récipient pour aérosol avec un propulseur identique à celui que l'on a décrit plus haut pour la peinture acrylique.

Un vernis ayant une composition conforme à l'invention peut s'appliquer sans risque de détrempe de la couche de peinture acrylique de base dès la mise hors poussière de celle-ci.

Les améliorations décrites plus haut apportées au mélange propulseur ont une influence sur le mélange diluant. Le mélange propulseur défini plus haut, contenant du chlorure de méthylène entre 1 et 50 % en poids du poids de ce mélange, permet l'usage d'un mélange diluant à composition simplifiée. Ce dernier mélange convient pour les peintures à teinte métallisée bicouches ; il comprend les corps suivants dans les proportions indiquées qui s'entendent en %, en poids par rapport au poids total du mélange diluant :

5

0 069 638

| — méthyléthylcétone | 60 % environ |
| — acétate d'éthylèneglycol | 7 % environ |
| — toluène | 18 % environ |
| — isopropanol | 15 % environ |

Ces proportions préférées d'un mélange diluant de base peuvent être modifiées dans le sens voulu pour une augmentation ou une diminution de la vitesse d'évaporation.

Ce même mélange convient aussi pour les peintures opaques ou à teintes métallisée monocouches quand on y adjoint un, deux ou trois des corps suivants : éthyl-2-hexanol, butanol, acétate d'éthylglycol, dans des proportions assez larges qui vont respectivement de 0,2 à 50 %, de 0,2 à 50 %, de 0,5 à 50 %, en poids par rapport à 100 g du mélange diluant indiqué ci-dessus.

Par exemple, le mélange diluant ci-dessus appelé mélange de base, peut conduire au mélange suivant qui convient généralement bien pour les peintures opaques et les peintures métallisées monocouches :

| — mélange de base | 100 g |
| — éthyl-2-hexanol | 5 g |
| — butanol | 1 g |
| — acétate d'éthylèneglycol | 15 g |

**Revendications**

1. Composition de peinture acrylique pour application sous forme d'aérosol comprenant une peinture acrylique classique, un mélange diluant comprenant des dérivés d'acétone et d'acétates, un mélange propulseur comprenant un dérivé chlorofluoré du carbone, caractérisée en ce que le mélange diluant comprend au moins les corps suivants : méthyléthylcétone, acétate d'éthyle, acétate de butyle, acétate d'éthylèneglycol, avec la condition que l'ensemble acétone + acétates représente en poids entre 30 et 100 % du mélange diluant, de préférence de 50 à 85 % cependant que le propulseur est constitué par un mélange préalablement préparé comprenant au moins un dérivé chlorofluoré du méthane et du chlorure de méthylène.

2. Composition selon la revendication 1 caractérisée en ce qu'elle contient de l'alcool isopropylique et/ou de l'alcool isobutylique.

3. Composition selon l'une quelconque des revendications 1, 2 caractérisée en ce que le mélange propulseur préalablement préparé contient 1 à 50 % de chlorure de méthylène en poids de ce mélange.

4. Composition selon l'une quelconque des revendications 1, 2 caractérisée en ce que le mélange diluant représente entre 50 et 80 %, de préférence entre 55 et 66 % en poids du poids total peinture acrylique plus mélange diluant.

5. Composition selon la revendication 3 caractérisée en ce que le dérivé chlorofluoré du méthane est l'un de $CCl_2F_2$, $CCl_3F$ ou un mélange $CCl_2F_2$ + $CCl_3F$.

6. Composition selon la revendication 1 caractérisée en ce que le mélange diluant comprend :

— de 40 à 80 %, de préférence 55 %, de cétones et d'acétates,
— de 20 à 25 %, de préférence 25 %, d'hydrocarbures aromatiques,
— de 0 à 15 %, de préférence 15 %, d'alcools isopropylique et isobutylique,
— **de 0 à 5 %, de préférence 5 %, d'agents divers.**

7. Composition selon la revendication 6 caractérisée en ce que le mélange diluant comprend en poids par rapport au poids total de ce mélange :

— 60 % environ de mek,
— 7 % environ d'acétate d'éthylèneglycol,
— 18 % environ de toluène,
— 15 % environ de propanol.

8. Composition selon la revendication 7 caractérisée en ce que le mélange diluant comprend pour 121 g de ce mélange, 100 g du mélange de la revendication 7, 5 g d'éthyl-2-hexanol, 1 g de butanol, 15 g d'acétate d'éthylèneglycol.

9. Composition selon l'une quelconque des revendications 1, 2 caractérisée en ce que le mélange propulseur contient en plus un gaz comprimé tel que $CO_2$, $N_2O$.

10. Composition selon l'une quelconque des revendications 1 à 8 caractérisée en ce que la peinture concentrée contient un élément à effet lubrifiant tel qu'une huile silicone en proportion de 0,5 à 10 % en poids de la peinture concentrée.

11. Vernis acrylique pour l'exécution d'une peinture métallisée bicouche en combinaison avec une peinture acrylique de base selon l'une quelconque des revendications 1 à 9, caractérisé en ce qu'il

6

comprend un concentré de base composé à 50 % en poids d'extraits secs acryliques et à 50 % d'acétate de butyle auquel on a ajouté un mélange diluant comprenant entre 20 et 80 % en poids d'acétate de butyle et d'acétate d'éthylèneglycol en proportions sensiblement égales.

## Claims

1. An acrylic paint composition for application in the form of an aerosol, comprising a conventional acrylic paint, a diluent mixture comprising derivatives of acetone and acetates, and a propellant mixture comprising a derivative of carbon containing chlorine and fluorine, characterized in that the diluent mixture comprises at least the following substances : methylethyl ketone, ethyl acetate, butyl acetate, ethylene glycol acetate, subject to the condition that the acetone + acetates together represent by weight between 30 and 100 % of the diluent mixture, preferably from 50 to 85 %, whilst the propellant consists of a previously prepared mixture comprising at least one derivative of methane containing chlorine and fluorine, and methylene chloride.

2. A composition as in Claim 1, characterized in that it also contains isopropyl alcohol and/or isobutyl alcohol.

3. A composition as in either of the Claims 1, 2, characterized in that the previously prepared propellant mixture contains 1 to 50 % of methylene chloride by weight of this mixture.

4. A composition as in either of the Claims 1, 2, characterized in that the diluent mixture represents between 50 and 80 %, preferably between 55 and 66 % by weight of the total weight of acrylic paint plus diluent mixture.

5. A composition as in Claim 3, characterized in that the methane derivative containing chlorine and fluorine is either $CCl_2F_2$ or $CCl_3F$ or a mixture of $CCl_2F_2 + CCl_3F$.

6. A composition as in Claim 1, characterized in that the diluent mixture comprises :

— from 40 to 80 %, preferably 55 % of ketones and acetates ;
— from 20 to 25 %, preferably 25 % of aromatic hydrocarbons ;
— from 0 to 15 %, preferably 15 % of isopropyl and isobutyl alcohols ;
— from 0 to 5 %, preferably 5 % of various agents.

7. A composition as in Claim 6, characterized in that the diluent mixture comprises by weight with respect to the total weight of the said mixture :

— about 60 % of methyl ethyl ketone ;
— about 7 % of ethyleneglycol acetate ;
— about 18 % of toluene ;
— about 15 % of propanol.

8. A composition as in Claim 7, characterized in that the diluent mixture comprises per 121 g of this mixture : 100 g of the mixture as Claim 7, 5 g of ethyl-2-hexanol, 1 g of butanol, 15 g of ethylene glycol acetate.

9. A composition as in either of the Claims 1, 2, characterized in that the propellant mixture contains in addition a compressed gas such as $CO_2$ or $N_2O$.

10. A composition as in any one of the Claims 1 to 8, characterized in that the concentrated paint contains an element having a lubricant effect, such as a silicone oil in the proportion of from 0.5 to 10 % by weight of the concentrated paint.

11. An acrylic varnish for carrying out a two-layer metallized painting in combination with a base acrylic paint as in any one of the Claims 1 to 9, characterized in that it comprises a base concentrate composed of 50 % by weight of dry acrylic extracts and of 50 % of butyl acetate, to which has been added a diluent mixture comprising between 20 and 80 % by weight of butyl acetate and of ethylene glycol acetate in substantially equal proportions.

## Ansprüche

1. Acrylfarbzusammensetzung zur Anwendung in Form von Aerosol, enthaltend eine klassische Acrylfarbe, ein Verdünnungsgemisch aus Aceton- und Acetatderivaten, ein Treibmittelgemisch aus einem Chlorfluorkohlenstoff-Derivat, dadurch gekennzeichnet, daß das Verdünnungsgemisch mindestens die folgenden Bestandteile enthält : Methylethylketon, Ethylacetat, Butylacetat, Ethylenglycolacetat, unter der Bedingung, daß die Gruppe aus Aceton und Acetaten zwischen 30 und 100 Gewichtsprozent des Verdünnungsgemisches darstellen, vorzugsweise von 50 bis 85 %, während das Treibmittel durch eine vorher vorbereitete Mischung gebildet ist, die mindestens ein Chlorfluor-Derivat des Methans und des Methylenchlorids enthält.

2. Zusammensetzung nach Anspruch 1, dadurch gekennzeichnet, daß sie auch Isopropyl- und/oder Isobutyl-Alkohol enthält.

3. Zusammensetzung nach Anspruch 1 oder 2, dadurch gekennzeichnet, daß das vorher vorbereitete Treibmittelgemisch 1 bis 50 % Methylenchlorid in Gewichtsprozent dieses Gemisches enthält.

4. Zusammensetzung nach Anspruch 1 oder 2, dadurch gekennzeichnet, daß das Verdünnungsgemisch zwischen 50 und 80 Gewichtsprozent, vorzugsweise zwischen 55 und 66 Gewichtsprozent vom Gesamtgewicht der Acrylfarbe plus dem Verdünnungsgemisch beträgt.

5. Zusammensetzung nach Anspruch 3, dadurch gekennzeichnet, daß das Chlorfluor-Derivat des Methans entweder $CCl_2F_2$ oder $CCl_3F$ oder ein Gemisch von $CCl_2F_2 + CCl_3F$ ist.

6. Zusammensetzung nach Anspruch 1, dadurch gekennzeichnet, daß das Verdünnungsgemisch folgendes enthält :

— 40 bis 80 %, vorzugsweise 55 % Ketone und Acetate,
— 20 bis 25 %, vorzugsweise 25 % aromatische Kohlenwasserstoffe,
—  0 bis 15 %, vorzugsweise 15 % Isopropyl- und Isobutyl-Alkohole,
—  0 bis  5 %, vorzugsweise  5 % sonstige Agentien.

7. Zusammensetzung nach Anspruch 6, dadurch gekennzeichnet, daß das Verdünnungsgemisch in Gewichtsprozent im Verhältnis zum Gesamtgewicht dieses Gemisches folgendes enthält :

— etwa 60 % MEK,
— etwa  7 % Ethylenglycolacetat,
— etwa 18 % Toluol,
— etwa 15 % Propanol.

8. Zusammensetzung nach Anspruch 7, dadurch gekennzeichnet, daß das Verdünnungsgemisch für 121 g dieses Gemisches 100 g des Gemisches nach Anspruch 7, 5 g Ethyl-2-Hexanol, 1 g Butanol, 15 g Ethylenglycolacetat enthält.

9. Zusammensetzung nach Anspruch 1 oder 2, dadurch gekennzeichnet, daß das Treibmittelgemisch darüberhinaus ein Druckgas, wie $CO_2$, $N_2O$ enthält.

10. Zusammensetzung nach einem der Ansprüche 1 bis 8, dadurch gekennzeichnet, daß die konzentrierte Farbe ein Element mit Schmierwirkung, wie bspw. ein Siliconöl im Verhältnis von 0,5 bis 10 Gewichtsprozent der konzentrierten Farbe enthält.

11. Acryllack zur Ausführung einer zweischichtigen metallisierten Farbe in Kombination mit einer Basisacrylfarbe nach einem der Ansprüche 1 bis 9, dadurch gekennzeichnet, daß er ein Grundkonzentrat enthält, das aus 50 Gewichtsprozent trockener Acrylextrakte und aus 50 % Butylacetat zusammengesetzt ist, dem man ein Verdünnungsgemisch hinzugefügt hat, das zu etwa gleichen Teilen zwischen 20 und 80 Gewichtsprozent Butylacetat und Ethylenglycolacetat enthält.